# EUROPEAN PATENT APPLICATION

(11) **EP 4 723 560 A1**
(43) Date of publication of application: **08.04.2026**
(21) Application number: 24383079.1
(22) Date of filing: 07.10.2024
(51) Int. Cl.: H04L 12/18

(54) **A METHOD OF COMMUNICATING DATA TO ONE OR MORE UES IN A TELECOMUNICATIONS NETWORK**

(71) Applicant: Vodafone Group Services Limited, Newbury, Berkshire RG14 2FN (GB)
(72) Inventor: DIAS SILVA, Marco Alexandre, London, W2 6BY (GB); DARIOL, Vaifro, London, W2 6BY (GB); CARNUCCIO, Maria Concetta, London, W2 6BY (GB)
(74) Representative: Boult Wade Tennant LLP

(57) **Abstract**

A method of communicating data to one or more user equipments, UEs, in a telecommunications network comprising a core network and an access network is provided. The method comprises communicating data from the core network to a base station of the access network, wherein the data is communicated between the core network and the base station via a multicast internet protocol. The method further comprises communicating the data from the base station to one or more UEs via a unicast internet protocol.

## Description

### Field of the invention

The present disclosure relates to IP communications in a telecommunications network. In particular, the invention relates to unicast and multicast IP in a telecommunications network comprising a core network and an access network.

### Glossary

3GPP - 3rd Generation Partnership Project
ASIC - Application-Specific-Integrated-Circuit
BGP - Border Gateway Protocol
CDMA - Code Division Multiple Access
CD-ROM - Compact Disc Read-Only Memory
CRS - Cell-specific Reference Signal
CSI-RS - Channel State Information Reference Signal
CU - Centralized Unit
DL - Downlink
DSP - Digital-Signal-Processor
DU - Distributed Unit
DVD-ROM - Digital Versatile Disc Read-Only Memory
EDGE - Enhanced Data Rates for GSM Evolution
EEPROM - Electrically Erasable Programmable Read-Only Memory
EIGRP - Enhanced Interior Gateway Routing Protocol
EPROM - Erasable Programmable Read-Only Memory
E-UMTS - Evolved UMTS
E-UTRA - Evolved UTRA
FDD - Frequency Division Duplex
FDMA - Frequency Division Multiple Access
FPGA - Field-Programmable-Gate-Array
GPRS - General Packet Radio Service
GRE - Generic Routing Encapsulation
GSM - Global System for Mobile Communications
IEEE - Institute of Electrical and Electronics Engineers
IP - Internet Protocol
LTE - Long Term Evolution (4G)
LTE-A - LTE-Advanced
MC - Multicast
MC-FDMA - Multicarrier Frequency Division Multiple Access
ML - Multilink
MS - Mobile Station
MT - Mobile Terminal
NR - New Radio (5G)
OFDMA - Orthogonal Frequency Division Multiple Access
Open RAN - Open Radio Access Network
OSPF - Open Shortest Path First
PDA - Personal Digital Assistant
RAM - Random-Access Memory
RAN - Radio Access Network
RIC - RAN Intelligent Controller
ROM - Read-Only Memory
RU - Remote Unit
SC-FDMA - Single Carrier Frequency Division Multiple Access
SRAN - Standard Radio Access Network
SS - Subscriber Station
TDD - Time Division Duplex
TDMA - Time Division Multiple Access
TE - Terminal Equipment
UC - Unicast
UE - User Equipment
UL - Uplink
UMTS - Universal Mobile Telecommunications System
UT - User Terminal
UTRA - Universal Terrestrial Radio Access

### Background

IP Multicast is a bandwidth-efficient technology that allows a single stream of information to be transmitted by the data source and delivered to multiple recipients, without repeating the same content in the same leg of the transmission (especially in legs of the transmission that are common to multiple recipients). In IP communication, messages sent in unicast mode are communicated between one sender and one specific recipient, based on an IP address of the recipient. Messages sent in broadcast mode are communicated between one sender and all recipients connected via the network (irrespective of the IP addresses of the recipients).

Multicast mode falls between these two modes, allowing group transmissions to a subset of all hosts, based on the IP addresses of the subset.

Multicast communication is efficient for scenarios such as video conferencing, corporate communications, and content distribution.

Multicast communication is used to multicast data and recipients can subscribe to the stream. For practical reasons, the recipients do not acknowledge receipt of the data and there is generally no procedure for re-sending data that is not correctly received. The data is sent on a best-effort basis.

Multicast communication is therefore effective in fibre networks and other secure-redundant networks (e.g., wired networks), where data transmission success rates are high. However, multicast communication is less effective in networks that are more prone to data loss, such as mobile wireless networks.

A Multilink (ML) solution for 5G Core Networks has been proposed, in which unicast (UC) and multicast (MC) transmissions are combined. In this approach, ML dynamically switches between UC and MC, based on network conditions. In some examples, when the connection is reliable, MC may be used. However, if network conditions deteriorate and the reliability of the connection drops below a threshold, UC may be used.

Nevertheless, radio networks face increased scalability and bandwidth constraints. Unicast communication can be inefficient when broadcasting to many receivers. Therefore, it is desirable to provide an improved solution for multicast IP communication in a telecommunications network, especially where the telecommunications network has a lossy component, such as a wireless access network.

### Summary

A method of communicating data to one or more user equipment, UEs, in a telecommunications network comprising a core network and an access network is provided. The method comprises communicating data from the core network to a base station of the access network, wherein the data is communicated between the core network and the base station via a multicast internet protocol. The method further comprises communicating the data from the base station to one or more UEs via a unicast internet protocol.

In contrast to the prior art, which switched between UC and MC, the proposed methods use both MC and US in different parts of the communication chain.

The data may be communicated between the core network and the base station using an address block reserved for multicast IP.

The data may be communicated between the core network and the base station using a secure tunnel, such as a GRE tunnel.

The data may be communicated from a node of the core network to the base station. Nevertheless, the origin of the data may be beyond the core network, such as from a source over the Internet

The origin of the data may be referred to as a content provider.

The base station may be situated on a boundary between a first network (e.g., a midhaul/backhaul/core network of the telecommunications network), which may be a redundant network such as a fibre network or MW ring, and a second network (e.g., an access network of the telecommunications network), which may be an unsecured network, such as a 3GPP 5G Open RAN. The first network may be relatively more reliable than the second network.

A "redundant" network may be designed with redundancy to ensure continuous operation, even in the event of a failure. A redundant network may provide multiple different paths for data to travel between network nodes. Redundant networks may therefore improve connection availability by providing multiple paths, so if one path fails, another can take over, ensuring minimal disruption. Therefore, a redundant network may have high availability and reliable data transmission. Examples of redundant network include:
Ring-protected fibre loop. High availability is provided by geographical path to reach a point, with devices able to switch data path automatically.
Hot-stand-by microwave link. High availability is provided by the use of two hardware elements in parallel, in which both are transmitting the same information so in case of failure, the second one is available to take over.

A network designed with redundancy to ensure continuous operation even in the event of a failure is often referred to as a "redundant" network or a "high-availability" network. These networks are built to provide multiple paths for data to travel, so if one path fails, another can take over, ensuring minimal disruption.

In contrast, a "non-redundant" network may only have one option for data to travel between two network nodes (a single path). Therefore, a non-redundant network may have low availability and less reliable data transmission than a redundant network.

In this context, "situated" may refer to a topographic position of the base station in the network.

The method may be implemented at one of a number of possible components in the base station. For example, the invention may be implemented in a centralized unit (CU), distributed unit (DU), remote unit (RU) and/or RAN Intelligent Controller (RIC).

Advantageously, the invention may be implemented on the boundary between the first (e.g., secured) network and the second (e.g., unsecured) network (or close to the boundary). Where the data is communicated via unicast to two or more data endpoints, there is duplication of the data between the unicast data source and any network nodes that are common to the data paths between the unicast data source and the two or more data endpoints. Where the data connection is reliable, this duplication of data may be considered an inefficient use of bandwidth and/or data processing resources at the common node(s). Therefore, it is advantageous for the invention to be implemented as close to the boundary as possible. Nevertheless, there may be practical reasons to implement the invention at other points in the network, such as difficulty providing resources for a memory buffer at particular network nodes.

In some examples, the invention may be implemented in the distributed units of the base station and data may be communicated via IP unicast in the fronthaul network between the distributed units and the radio units of the base station (even though the fronthaul network may be a fixed network). This may result in duplication of data in this network where the distributed unit of the base station is serving multiple UEs that are subscribed to the data stream.

In other examples, the invention may be implemented in the centralised unit(s) of the base station and the data may be communicated via IP unicast in the midhaul network between the centralized unit(s) and the distributed units (as well as the fronthaul network). This may also result in duplication of data in this network where the base station is serving multiple UEs that are subscribed to the data stream.

The method may further comprise storing the data in a memory buffer of the base station.

The method may further comprise receiving, from a UE of the one or more UEs, a request for one or more segments of the data. The method may further comprise retrieving the one or more segments from the memory buffer. The method may further comprise resending the one or more segments of data from the base station to the UE via the unicast internet protocol.

In other words, if the UE does not correctly receive one or more segments of the data, the UE may request the base station to re-send those one or more segments. The base station may determine whether the one or more segments are still stored in the memory buffer. If they are still available, the base station may re-send the one or more segments. If the one or more segments are not still stored in the memory buffer (e.g., because they were originally sent prior to the period of time during which buffer retains the data), the base station may send an error to the UE in response to the request to resent the one or more packets of data.

The data may comprise a plurality of packets. Communicating the data from the base station to the one or more UEs (and from the core network to the base station) may comprise communicating each of the plurality of packets. The method may further comprise receiving, from a UE of the one or more UEs, an acknowledgement in respect of each of the packets in a first subset of the plurality of packets. The acknowledgement may be received at the base station less than an acknowledgement period after the packet is sent to the UE. The method may further comprise determining that an acknowledgement has not been received from the UE in respect of at least one packet of the plurality of packets, within the acknowledgement period after the packet is sent to the UE. The method may further comprise resending the at least one packet from the base station to the UE via the unicast internet protocol.

Communicating the data from the core network to the base station and from the base station to the one or more UEs may comprise incrementally communicating segments/packets of the data over time.

In other words, the data may be a part of a continuous data stream, such as a live stream relating to real-time events (e.g., a live television broadcast, conference call, and the like).

The method may further comprise managing the memory buffer to store a portion of the data communicated to the one or more UEs within a predetermined period of time.

In some examples, the predetermined period of time may be 10 seconds (or 100 seconds, 60 seconds, 20 seconds, 5 seconds, or 1 second).

Managing the memory buffer may further comprise discarding data communicated to the one or more UEs prior to the predetermined period of time.

The one or more UEs may comprise all UEs subscribed to a multicast group associated with the data.

The memory buffer may comprise a predetermined size of data storage. The method may further comprise managing the memory buffer to store a most recent portion of the data communicated to the one or more UEs, up to the predetermined size, and discarding data exceeding the predetermined size.

The most recent portion of the data communicated to the one or more UEs (up to the predetermined size) may comprise a continuous potion of the data stream between an instantaneously present point in time and a point in the past.

The data may be a continuous data steam.

The portion of the data stored in the memory buffer may be a contiguous portion of the data.

The data may not be communicated in a regular continuous stream (with a constant instantaneous data rate over time). In other words, the data may be communicated in regular or irregular chunks, having a high data rate for periods of time, interleaved with periods of no or low data transmission. The periods of high data rate may be relatively short compared to the periods of low data rate/no data. Therefore, the communication of the data may be described as "bursty".

If data is lost between the node and the base station (during the multicast portion of the data transmission), there may be no mechanism for the base station to request that the missing data be re-sent. In practice, data is unlikely to be lost between the core network node and the base station because the wired data connections between the core network and the base station are reliable (especially compared to the wireless connection).

The method may further comprise communicating, between a UE of the one or more UEs and the base station, a request by the UE to subscribe to a multicast group associated with the data (subscribe to the data stream).

The method may further comprise communicating from the base station to a source of the data (which may be described as a source node), a request by the base station to subscribe to the multicast group (data stream).

The base station may subscribe to the multicast group and may then forward the data to the UE via a unicast communication protocol.

The one or more UEs may comprise a plurality of UEs.

The UE may be a first UE of the one or more UEs.

The one or more UEs may comprise a first UE and a second UE. The method may further comprise communicating, between a second UE of the one or more UEs and the base station, a request for the second UE to subscribe to the data stream.

Advantageously, the base station is already subscribed to the data stream may simply forward the data to the second UE, as well as to the first UE.

The unicast internet protocol may be one of:
EIGRP;
OSPF;
BGP; and
TCP-IP.

Communicating data between the node and the base station via a multicast internet protocol may comprise simultaneously communicating the data between the node and a plurality of base stations, where the base station is one of the plurality of base stations.

The data may comprise one or more of:
video data (such as real-time video data, e.g., live stream or conference call data);
software update data;
news alert data; and
subscriber content (such as articles, videos, games, and the like).

The UE may be a member of a multicast group comprising a plurality of UEs to which the data is communicated. The multicast group may be dynamically formed based on one or more of: a geographic location of the UE, an indication of an interest or hobby of a user of the UE; a hardware capability of the UE; a software capability and/or version of the UE; a subscription request from the UE; and

The base station may be an OpenRAN base station or a SRAN base station.

The base station may be a gNodeB.

A base station configured to perform the methods described above is also provided.

A computer program comprising instructions that, when executed on a processor, cause the processor to perform the methods described above, is also provided.

### Brief description of the drawings

The invention is described with reference to the following non-limiting examples.
Fig. 1 illustrates a schematic of a telecommunications network according to a specific example.
Fig. 2 illustrates a flowchart of a method according to a specific example.
Fig. 3 illustrates a base station according to a specific example.

### Detailed description

The present disclosure provides a new approach for implementing content broadcast in a telecommunications network that comprises a first network and a second network, with different characteristics. In the specific examples described below, these are referred to as a fixed network and an access network, respectively. The fixed network (which may include one or more of the core network, the backhaul network connecting the core network to the base station, and the midhaul network connecting centralised units of the base station to distributed units of the base station) may also be secured and/or redundant networks, in which data transmission is reliable. The access network may be a wireless network, which may be less reliable than the wired networks (especially if radio conditions in the wireless network are poor).

Some prior art solutions use multicast IP communication to endpoints when the radio conditions are good and use unicast IP communication when the radio conditions are poor. When this system operates in unicast IP mode, data is duplicated in the fixed portion of the network (e.g., the core/backhaul/midhaul network) and the efficiency of the data transmission is reduced.

The proposed methods combine multicast and unicast in different parts of the communication chain (in series), rather than by switching between the two.

A Multicast IP component of the data transmission chain is provided between the core network (ultimately, from a data source that may be in the core network or may be beyond the core network, such as via the Internet). IP multicast is used to deliver common content (e.g., emergency alerts, live events) to a radio access base station, at the edge of the fixed network. The base station (e.g., gNodeB or eNodeB) will buffer the multicast data stream and communicate the data to the subscribed endpoints via an access network (e.g., a non-redundant network, such as a mobile wireless network).

Multicast groups can be dynamically formed based on location, interest, or other criteria.

Multicast communications may originate from a source node and be sent to destination endpoints (e.g., UEs) based on identifiers of the endpoints (e.g., IP addresses).

The source node (broadcaster) needs to know when a device that joins the multicast group. To join the group, a new destination endpoint may send a subscription request to the source node.

Most radio access networks do not natively support IP multicast. Therefore, to deliver IP multicast directly to the UE, an IP tunnel would be needed. Moreover, since there is no mechanism in IP multicast for re-transmission of lost/corrupted packets, the UE would be unable to recover any dropped packets.

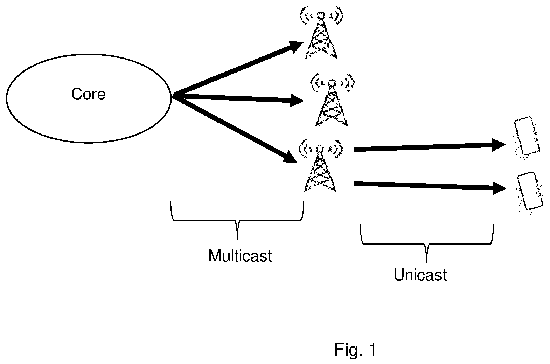

The proposed methods therefore use a Unicast communication protocol for the component of the communication chain between the base station and the UE (for the radio link hop). Fig. 1 illustrates a schematic of a network according to some specific non-limiting examples.

A unicast communication protocol provides direct communication between sender and receiver. Moreover, a unicast communication protocol may be used to ensure that the packets of data are successfully delivered to the UE (by selecting a unicast protocol that guarantees delivery). If packets are corrupted or lost, the UE may request the packets to be resent.

The proposed methods may use existing unicast routing protocols (e.g., EIGRP, OSPF, BGP) to populate routing tables.

The base station therefore provides a network node at which the data is translated between a multicast IP communication protocol and a unicast IP communication protocol. As described above, multicast is used to propagate data from the source node to many receivers simultaneously (including the base station). Unicast is used for direct communication between the sender and receiver (between the base station and the UE).

The data connection in the fixed network is more reliable and therefore the likelihood of dropped packets is low. Therefore, it is more efficient to use multicast IP, to avoid duplication of data between network node on the communication path between the source node and the receiving endpoints. In some examples, the fixed network may be a fibre network.

The data connection in the access network (which may be a wireless and/or non-redundant network) is less reliable and prone to a higher probability of dropped packets. Therefore, to ensure a reliable connection, the proposed methods convert the data to a unicast IP protocol for the wireless portion of the data transmission chain (e.g., a mobile cellular network or satellite network).

Even when the data connection in the access network is good (e.g., due to favourable radio conditions), the data connection may deteriorate without warning. Therefore, prior art methods that switch between multicast and unicast are susceptible to sudden changes in radio conditions and are limited by how fast they can react to such changes.

The proposed methods therefore break the transmission chain in two (a multicast portion on the fixed network and a unicast portion on the access network) and provide a translation point at the node where the data transitions between the two protocols (at the base station). The base station is modified to enhance the interface software to translate between multicast IP and unicast IP.

The proposed methods also use the base station as a buffer point. The base station stores the multicast IP transmission in a data buffer after it has translated the data and communicated it to the one or more UEs via unicast. If any packets are dropped, the UE may request the base station to re-send these packets. The base station may retrieve the packets from the buffer and re-send them. Alternatively, according to some unicast IP protocols, the UE may be required to acknowledge receipt of the packets. If some packets are not correctly acknowledged, the base station may re-send those packets.

In some examples, the base station may retain packets in the buffer for a predetermined period of time (e.g., to allow the UE to request that the packets are re-sent for a period after the initial transmission. In some examples, the buffer may retain 10 seconds worth of data.

In some examples, the base station may retain packets in the buffer until those packets have been acknowledged by every UE to which they have been forwarded.

In prior art networks, significant barriers exist to implementing multicast IP across wireless access networks. Therefore, in some prior art scenarios, UEs connected to the network via a wireless access network would obtain data from the data source via a unicast IP protocol (from end-to-end from the data source to the UEs). There may be multiple UEs requesting the same data from the data source. This can result in an inefficient use of the network resources in the wired network, because the same data may be communicated repeatedly between the source node and any other nodes in the network common to the UE endpoints. The proposed methods improve efficiency of data transmission by allowing the data to be communicated between the data source and the base station via multicast and then using unicast IP for the access network part of the transmission chain. The proposed methods may therefore improve network efficiency by reducing the traffic in the core part of the network.

In other prior art networks, multicast IP is implemented end-to-end across the wired core network and wireless access network. There is no mechanism for receiving lost packets in this multicast IP scenario (and packets are most likely to be dropped in the wireless access network). The present invention implements this portion as unicast and may therefore improve the reliability of the data connection, compared to these prior art scenarios.

The proposed methods may be useful for a number of multicast data applications, including but not limited to:
broadcasting a live event
broadcasting a tv program
video conferencing
delivering push updates, such as packages of data for application updates.

When the base station receives a subscription request for the UE to join a multicast group, the base station may determine whether it is already subscribed to that group (e.g., to send the data to another UE that is subscribed). If the base station is already subscribed, the base station may add the UE to the list of UEs that the data should be forwarded to. If the base station is not already subscribed, the base station may subscribe to the multicast group (so that the base station is the destination endpoint). The base station may then buffer the received multicast data and forward it to the UE via unicast. Any dropped packets may be re-sent from the buffer.

The proposed solution is particularly suitable for 5G networks. The proposed solution is also particularly suitable for OpenRAN. Nevertheless, the invention is not limited to 5G or OpenRAN.

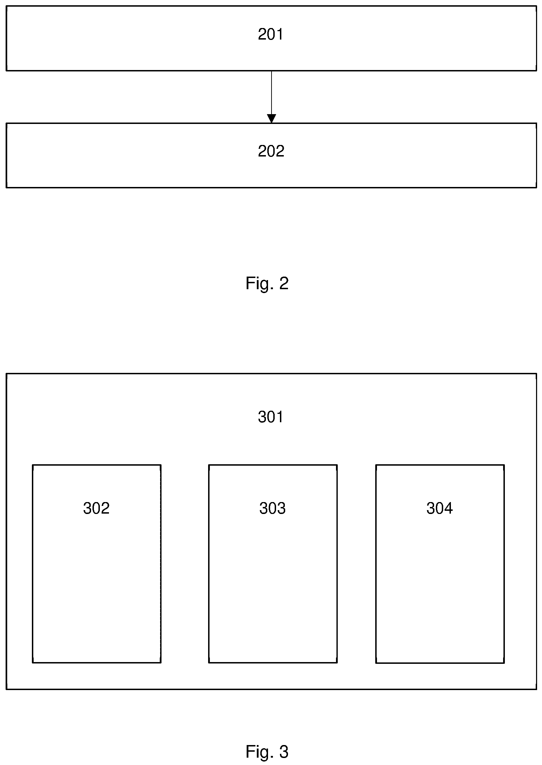

Fig. 2 illustrates a flowchart of an example method of communicating data to one or more user equipment, UEs, in a telecommunications network comprising a core network and an access network. The method comprises:
at step 201: communicating data from the core network to a base station of the access network, wherein the data is communicated between the core network and the base station via a multicast internet protocol; and
at step 202: communicating the data from the base station to one or more UEs via a unicast internet protocol.

Fig. 3 illustrates a base station 301 according to a specific example. The base station comprises one or more wired transceivers 302. The base station further comprises a memory buffer 303. The base station further comprises one or more wireless transceivers 304.

Any of the methods described herein may be implemented as a computer program. The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific networks in some examples, (such as a 4G/LTE or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a mobile device, a network entity, a step, a parameter, or a message) means "one or more" (for instance one or more mobile devices, one or more network entities, one or more steps, one or more parameters, or one or more messages). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of communicating data to one or more user equipment, UEs, in a telecommunications network comprising a core network and an access network, the method comprising:
communicating data from the core network to a base station of the access network, wherein the data is communicated between the core network and the base station via a multicast internet protocol; and
communicating the data from the base station to one or more UEs via a unicast internet protocol.

2. The method of claim 1, further comprising storing the data in a memory buffer of the base station.

3. The method of claim 2, further comprising:
receiving, from a UE of the one or more UEs, a request for one or more segments of the data;
retrieving the one or more segments from the memory buffer; and
resending the one or more segments of data from the base station to the UE via the unicast internet protocol.

4. The method of claim 2, wherein the data comprises a plurality of packets, wherein communicating the data from the base station to the one or more UEs (and from the core network to the base station) comprises communicating each of the plurality of packets, wherein the method further comprises:
receiving, from a UE of the one or more UEs, an acknowledgement in respect of each of the packets in a first subset of the plurality of packets, wherein the acknowledgement is received at the base station less than an acknowledgement period after the packet is sent to the UE;
determining that an acknowledgement has not been received from the UE in respect of at least one packet of the plurality of packets, within the acknowledgement period after the packet is sent to the UE;
resending the at least one packet from the base station to the UE via the unicast internet protocol.

5. The method of any of claims 2 to 4, further comprising managing the memory buffer to store a portion of the data communicated to the one or more UEs within a predetermined period of time.

6. The method of claim 5, wherein managing the memory buffer further comprises discarding data communicated to the one or more UEs prior to the predetermined period of time, wherein the one or more UEs comprise all UEs subscribed to a multicast group associated with the data.

7. The method of any of claims 2 to 4, wherein the memory buffer comprises a predetermined size of data storage, wherein the method further comprises managing the memory buffer to store a most recent portion of the data communicated to the one or more UEs, up to the predetermined size, and discarding data exceeding the predetermined size.

8. The method of any preceding claim, wherein the data is a continuous data steam.

9. The method of any preceding claim, further comprising:
communicating, between a UE of the one or more UEs and the base station, a request for the UE to subscribe to a multicast group associated with the data; and
communicating from the base station to a source of the data, a request for the base station to subscribe to the multicast group.

10. The method of any preceding claim, wherein the one or more UEs comprises a plurality of UEs.

11. The method of any preceding claim, wherein the unicast internet protocol is one of:
EIGRP;
OSPF;
BGP; and
TCP-IP.

12. The method of any preceding claim, wherein the data comprises one or more of:
video data;
software update data;
news alert data; and
subscriber content.

13. The method of any preceding claim, wherein the base station is an OpenRAN base station or a SRAN base station.

14. A base station configured to perform the method of any preceding claim.

15. A computer program comprising instructions that, when executed on a processor, cause the processor to perform the method of any of claims 1 to 13.
